(19) Europäisches Patentamt / European Patent Office / Office européen des brevets

(11) EP 2 749 001 B1

(12) **EUROPEAN PATENT SPECIFICATION**

(45) Date of publication and mention of the grant of the patent:
**13.01.2016 Bulletin 2016/02**

(51) Int Cl.:
***H04L 29/06*** *(2006.01)*

(21) Application number: **12753337.0**

(22) Date of filing: **21.08.2012**

(86) International application number:
**PCT/US2012/051708**

(87) International publication number:
**WO 2013/028683 (28.02.2013 Gazette 2013/09)**

(54) **DETERMINING VALIDITY OF SIP MESSAGES WITHOUT PARSING**

BESTIMMUNG DER GÜLTIGKEIT VON SIP-NACHRICHTEN OHNE SYNTAXANALYSE

DÉTERMINATION DE VALIDITÉ DE MESSAGES SIP SANS ANALYSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.08.2011 US 201113217682**

(43) Date of publication of application:
**02.07.2014 Bulletin 2014/27**

(73) Proprietor: **ALCATEL LUCENT**
**92100 Boulogne-Billancourt (FR)**

(72) Inventors:
 • **GURBANI, Vijay, K.**
 **Lisle, IL 60532 (US)**
 • **HO, Tin, K.**
 **Milburn, NJ 07041 (US)**

(74) Representative: **Berthier, Karine**
**Alcatel-Lucent**
**148/152, route de la Reine**
**92100 Boulogne-Billancourt (FR)**

(56) References cited:
**EP-A1- 2 216 947**

• **ANIL MEHTA ET AL: "On the inefficacy of Euclidean classifiers for detecting self-similar Session Initiation Protocol (SIP) messages", INTEGRATED NETWORK MANAGEMENT (IM), 2011 IFIP/IEEE INTERNATIONAL SYMPOSIUM ON, IEEE, 23 May 2011 (2011-05-23), pages 329-336, XP032035496, DOI: 10.1109/INM. 2011.5990708 ISBN: 978-1-4244-9219-0**
• **HO T K ET AL: "On multiple classifier systems for pattern recognition", PATTERN RECOGNITION, 1992. VOL.II. CONFERENCE B: PATTERN RECOGNITION METHODOLOGY AND SYSTEMS, PROCEEDINGS., 11TH IAPR INTERNATIONAL CONFERENCE ON THE HAGUE, NETHERLANDS 30 AUG.-3 SEPT. 1992, LOS ALAMITOS, CA, USA, IEEE COMPUT. SOC, US, 30 August 1992 (1992-08-30), pages 84-87, XP010030034, DOI: 10.1109/ICPR.1992.201727 ISBN: 978-0-8186-2915-0**
• **ANIL MEHTA ET AL: "On using multiple classifier systems for Session Initiation Protocol (SIP) anomaly detection", COMMUNICATIONS (ICC), 2012 IEEE INTERNATIONAL CONFERENCE ON, IEEE, 10 June 2012 (2012-06-10), pages 1101-1106, XP032273838, DOI: 10.1109/ICC. 2012.6364010 ISBN: 978-1-4577-2052-9**
• **HENTEHZADEH N ET AL: "Statistical Analysis of Self-Similar Session Initiation Protocol (SIP) Messages for Anomaly Detection", NEW TECHNOLOGIES, MOBILITY AND SECURITY (NTMS), 2011 4TH IFIP INTERNATIONAL CONFERENCE ON, IEEE, 7 February 2011 (2011-02-07), pages 1-5, XP031982270, DOI: 10.1109/NTMS.2011.5720662 ISBN: 978-1-4244-8705-9**

**Description**

**Field of the Invention**

The present invention relates generally to message processing techniques, and more particularly to techniques for determining the validity of SIP messages.

**Background of the Invention**

The Internet has become a primary communications network. All manners of Internet sessions, such as voice sessions, instant message sessions and gaming sessions, occur on the Internet tens of millions of times a day. The Session Initiation Protocol (SIP [24]) is an important signaling protocol that allows heterogeneous sessions to be established. See, e.g., J. Rosenberg et al., "SIP: Session Initiation Protocol. RFC 3261 (Proposed Standard) (2002), incorporated herein by reference. See also, Updated SIP RFCs 3265, 3853, 4320, 4916, 5393, 5621, 5626, 5630, 5922, 5954 and 6026, each incorporated herein by reference. As SIP becomes pervasive on the Internet, securing SIP becomes paramount. SIP ecosystems are especially prone to denial of service (DoS) or distributed denial of service (DDoS) attacks. The threat of such attacks targeted either at the SIP layer or at the supporting infrastructure that SIP needs to operate are well-known.

SIP is a text-based protocol defined by a context-sensitive grammar. It is difficult to build a parser generator for the protocol since the grammar is not LL(1). Generally, an LL(1) parser looks only at the next token to make parsing decisions. Furthermore, the grammar is permissive and allows various combinations for representing a valid SIP message. The grammar allows (i) multiple legal representations of headers in a SIP message (e.g., short form header name and long form header name); (ii) multiple headers of the same name (e.g., Via, Route) to occur either in a block, or separated by other headers; and (iii) some headers to be separated by commas or a carriage-return line-feed digraph. Due to vagaries of SIP parsing, most parsers are either hand-crafted or a hybrid between hand-crafting and LL(*) parsing.

For other transport layer protocols, on the other hands, such as Transmission Control Protocol (TCP) and User Datagram Protocol (UDP), or even data unit (PDU) is also parsed, but the grammars of these protocols do not allow too much flexibility in representation. The headers of these protocols are fixed-length and the byte sequences are well defined such that deviating from the fixed format invalidates a PDU immediately. This is not true of SIP as there are many valid ways to represent a given SIP message. This is of concern as minor perturbations in a message can make it unusable, forcing the recipient to spend resources parsing the message in its entirety before reaching the conclusion that the message is invalid.

Furthermore, the SIP grammar incorporates rules from other constructs such as electronic mail Uniform Resource Identifiers (URIs), Internet host names, and various Multipurpose Internet Mail Extensions (MIME) types that define the session being set up. The resultant composite grammar is complex and prone to individual interpretation by implementers. Thus, SIP parsing is considered an easy vector for mounting an attack as it forces the recipient to spend resources parsing the message to determine its validity. It has been estimated that a SIP server utilizes 25-40% of the processing time in parsing. The SIP server will spend resources trying to parse the received message, and if thousands of such malformed messages arrive simultaneously, a DoS attack can be effectively mounted.

A number of techniques have been proposed or suggested for detecting invalid SIP messages. For example, Euclidean-distance classifiers have been employed where a SIP message is reconstituted to a series of n-grams. For example, if n is equal to 4, then the SIP message is broken down to a series of 4-byte words. The counts of occurrences of each such word are represented as a feature vector that characterises the SIP message that can be processed by a statistical classifier. At run time, when a new SIP message arrives, it can be converted to a similar feature vector by counting the occurrences of n-grams derived from the headers and payload that comprises the new SIP message. The incoming feature vector is compared to the training set using Euclidean distance as a metric, and the message is considered normal if its distances to the normal training vectors fall within a threshold, and anomalous otherwise. The Euclidean-distance classifier thus determines which incoming SIP message is anomalous based on its previous training data. Euclidean-distance classifiers, however, require that there be a substantive difference (in the number of bytes) between a normal SIP message and an anomalous one. ANIL MEHTA ET AL, in the text named "INTEGRATED NETWORK MANAGEMENT" (2011) relates to the inefficacy of Euclidean classifiers for detecting self-similar SIP messages. HO T K ET AL, in the text named "PATTERN RECOGNITION" (2011) relates to multiple classifier systems for pattern recognition.

A need therefore exists for improved techniques for detecting invalid SIP messages.

**Summary of the Invention**

Generally, methods and apparatus are provided for determining the validity of SIP messages, such as self-similar messages, without parsing the message. According to one aspect of the invention, a SIP message is processed by creating a feature vector matrix of the SIP message; processing the feature vector matrix using a plurality of classifiers; combining results generated by the plurality of classifiers to obtain a combined result; and processing the SIP message based on the combined result. The plurality of classifiers can be trained on a training data set. The SIP message can optionally be classified, for example, as a normal message or an anomalous message based on the combined result. In addition, the SIP message can optionally be processed or rejected based on the combined result.

The results generated by the plurality of classifiers are combined to obtain the combined result using a combination function such as a voting rule or a logistic regression. A logistic regression, for example, employs a linear combination of individual decisions of the plurality of classifiers to predict a logarithm of the ratio of the probability that the SIP message belongs to a first class over the probability of the SIP message belonging to a second class.

A more complete understanding of the present invention, as well as further features and advantages of the present invention, will be obtained by reference to the following detailed description and drawings.

**Brief Description of the Drawings**

FIG. 1 illustrates a multiple classifier system that incorporates aspects of the present invention;

FIG. 2 is a sample table illustrating exemplary classifier results for a number of exemplary classifiers;

FIG. 3 is a flow chart describing an exemplary multiple classifier process incorporating features of the present invention; and

FIG. 4 depicts an exemplary computer system that may be useful in implementing one or more aspects and/or elements of the present invention.

**Detailed Description**

The present invention provides improved techniques for detecting invalid SIP messages, including self-similar SIP messages having minimal perturbations relative to a valid SIP message. These perturbations are minimal such that distinguishing a perturbed (and hence invalid) version of a SIP message from its regular counterpart is non-trivial, especially for automatic machine operated algorithms or intrusion detection systems (IDS). For example, the "From:" header in a SIP message can be minimally perturbed by inserting a space between the letters 'r' and 'o,' to invalidate the message, as successfully parsing the *From* header is crucial to SIP. It is noted that an IDS does not effectively detect anomalous messages from normal messages when the difference between the normal and anomalous messages is a few negligible bytes. Due to the expansive SIP grammar, it becomes rapidly inefficient to write thousands of IDS rules to catch all possible permutations of illegal SIP messages while allowing the combination of legal SIP messages to pass through unaffected.

A SIP adversary who has access to the signaling channel can craft malformed SIP messages that are virtually indistinguishable from the real messages gathered from an eavesdrop of the channel. Even if the SIP adversary does not have access to the signaling channel, they can craft malicious packets that appear to look like real ones to bypass an IDS or a firewall filter, which will typically not perform in-depth analysis on the message.

According to one aspect of the invention, the validity of a message is determined (e.g., a SIP message is classified as a normal or anomalous message) without parsing the message. According to a further aspect of the invention, a multiple classifier system is employed to classify SIP messages. See, for example, Tin Kam Ho et al., "Decision Combination in Multiple Classifier Systems," IEEE Transactions on Pattern Analysis and Machine Intelligence, 16(1):66-75 (1994), incorporated by reference herein.

The exemplary multiple classifier system employs a plurality of several high-performing classifiers with complementary strengths, and a decision combination function. The present invention recognizes that multiple classifier systems do not rely on a decision from a single classifier, but rather, combine individual decisions from multiple classifiers to reach a consensus decision. A combination function is used to take advantage of the strengths of individual classifiers, avoid their weaknesses, and improve classification accuracy. In one exemplary implementation, a combination function is used that leverages the classifier correlation using logistic regression (LR).

According to yet another aspect of the invention, each classifier in the dsiclosed multiple classifier system is selected based on its individual and relative classification performance. In various embodiments, the decisions of the chosen classifiers are combined using one or more of simple voting and a weighted linear combination based on logistic regression (LR).

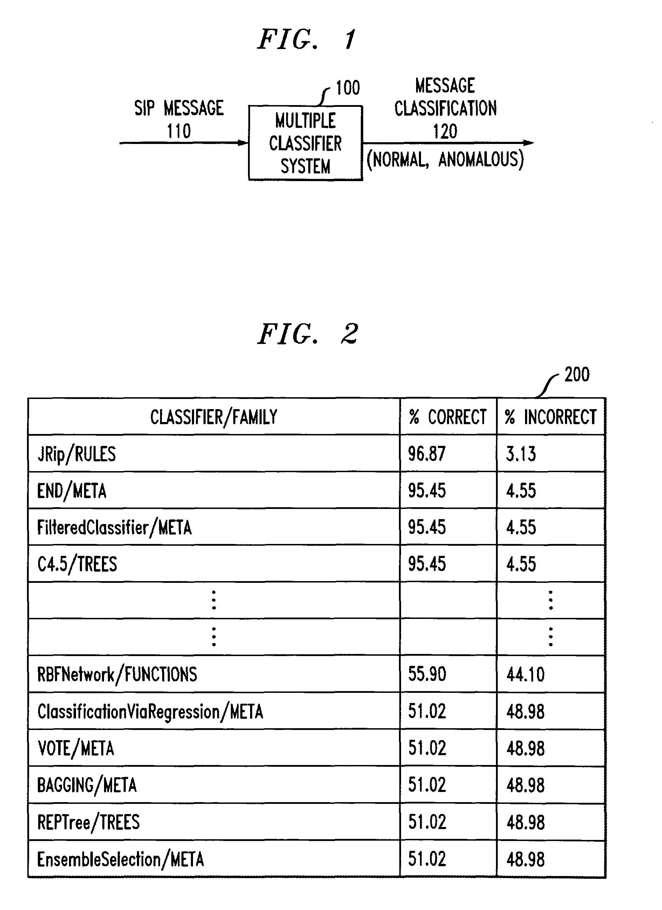

FIG. 1 illustrates a multiple classifier system 100 that incorporates aspects of the present invention. As shown in FIG. 1, the multiple classifier system 100 processes one or more SIP messages 110 to determine the validity of a given SIP message 110. For example, a SIP message 110 can be classified as a normal message or an anomalous message.

In one exemplary implementation, the multiple classifier system processes a SIP message by creating a feature vector matrix of the SIP message; processing the feature vector matrix using a plurality of classifiers; combining results generated by the plurality of classifiers to obtain a combined result; and processing the SIP message based on the combined result. The following discussion is organized in a similar manner.

Feature Vector Extraction and Reduction

Machine learning algorithms usually operate on vector data, so a technique is employed to embed a SIP message to a high-dimensional vector space. Using the nomenclature established by K. Rieck et al., "A Self-Learning System for Detection of Anomalous SIP Messages," Principles, Systems and Applications of IP Telecommunications. Services and Security for Next Generation Networks: Second International Conference, IPTComm 2008, Heidelberg, Germany, July 1-2, 2008. Revised Selected Papers, 90-06 (2008), to define the feature extraction process, use a set of feature strings $Q$ are used to model the contents of a SIP message. Given a feature string $q \in Q$ and a SIP message $x$, the number of occurrences of $q$ are determined in $x$ and a frequency value $f(x,q)$ is obtained. The frequency value of $q$ in $x$ acts as a measure of importance; the higher the frequency of $q$, the more it contributes to $x$ .

An embedding function $\phi$ maps all SIP messages $X$ to a $|Q|$ - dimensional vector space by considering the frequencies of feature strings in $Q$:

$$\phi : X \rightarrow \mathsf{R}^{|Q|} \text{with} \quad \phi(x) \mapsto (f(x,q))_{q \in Q}, \qquad (1)$$

where R is a set or a vector that stores the frequencies of the n-grams found in X.

Once the embedding function $\phi$ has mapped the SIP message to a vector, it can be analyzed further using standard classifiers.

An important consideration is how to specify $\phi$. Clearly, tokenizing x using SIP ABNF delimiters is not an option because that implies parsing x according to the SIP ABNF. As discussed above, parsing a SIP message is computationally expensive and therefore should not be the first option. Rieck et al. use the $n$ -grams technique to arrive at a vector. Instead of parsing a SIP message, feature strings are extracted by moving a sliding window of length $n$ over $x$ ($n$ =4). At each position, a substring of length $n$ is considered and the frequency of its occurrence is counted.

For example, consider the feature string extraction across the following SIP message fragment (the < cr >< lf > symbols below represent carriage-return and line-feed digraph that terminates each SIP header line):

$$\phi("BY Esip : a@example.comSIP/2.0 < cr >< lf >$$

$$To : sip : b@example.com")$$

Using the $n$-gram technique, with $n$ =4 will produce 49 $n$-grams, including ampl (2 occurences); com (2 occurences); e.co (2 occurences); @exa (2 occurences) and exam (2 occurences).

Generally, the vector space induced by the $n$ -grams is very highly-dimensional. To reduce the number of dimensions, the frequency distribution of these $n$ -grams is observed and a number of exemplary $n$ -grams are selected that have significantly high frequency counts. These exemplary $n$ -grams serve as the feature vectors that are used to train and test the classifiers. The feature vectors and the SIP messages combine to produce a matrix that was used as input to train and test the classifiers in the multiple classifier system. As discussed further below in conjunction with FIG. 2, table 200 shows the results of each of a number of exemplary classifiers on an exemplary training dataset.

Classifiers in Multiple Classifier System

The multiple classifiers that are employed in a given implementation can be selected, for example, by evaluating classification performance from a comprehensive list of classifiers. For example, standard classifiers can be employed from Weka. See, for example, Ian H. Witten and Eibe Frank, "Data Mining: Practical Machine Learning Tools and Techniques," Elsevier Inc. (2005), incorporated herein by reference. Generally, Weka is a public-domain machine learning software tool from the University of Waikato, New Zealand. Weka contains a comprehensive suite of commonly used classifiers. Default parameters supplied by Weka can optionally be employed to evaluate a dataset with each of the classifiers. It is recognized that further improvements can be obtained by expanding the training set to include a larger population of messages.

FIG. 2 is a sample table 200 illustrating exemplary classifier results for a number of exemplary classifiers from Weka. The results from a number of exemplary classifiers are provided in the form of "% correct" (i.e., good messages are classified as "normal" and bad messages are classified as "anomalous") and "% incorrect" (i.e., good messages are classified as "anomalous" and bad messages are classified as "normal"). The exemplary embodiment restricts the maximum number of classifiers in the multiple classifier system to three (3). It is noted however, that any number of classifiers can be employed in the multiple classifier system, as would be apparent to a person of ordinary skill in the art. To avoid a combinatorial explosion in the number of 3-classifier systems to construct from the exemplary available 28 classifiers, a few classifiers are pre-selected based on the accuracy of their correct decisions as well as their being complementary to each other (i.e., the accuracy by which these classifiers classify normal messages as normal and anomalous messages as anomalous). The exemplary pre-selection criteria selects those classifiers from table 200 that predict correct decisions with a percentage that exceeds a predefined threshold (or the top N classifiers).

Linear regression can be performed on the pre-selected classifiers to determine the statistical similarity of these classifiers. For those classifiers that are statistically similar, a single classifier can be selected as the representative classifier from this statistically similar group.

For a discussion of classifier training, see, for example, Trevor Hastie et al., The Elements of Statistical Learning: Data Mining, Inference, and Prediction, (Springer Science+Business Media, New York, 2nd edition, 2009), incorporated by reference herein.

Multiple Classifier Systems

As previously indicated, the disclosed multiple classifier system does not rely on a decision from a single classifier, but rather, combines individual decisions from multiple classifiers to reach a consensus decision. For a general discussion of multiple classifier systems, see, for example, Tin Kam Ho et al., "Decision Combination in Multiple Classifier Systems," IEEE Transactions on Pattern Analysis and Machine Intelligence, 16(1):66 -75 (1994); or J. Kittler et al., "On Combining Classifiers," IEEE Transactions on Pattern Analysis and Machine Intelligence, 20(3):226 -239 (1998), each incorporated by reference herein.

An appropriate combination function can take advantage of the strengths of individual classifiers, avoid their weaknesses, and improve classification accuracy. A voting rule combination function, for example, incorporates a counting rule over the decisions of the classifiers in the multiple classifier system. A logistic regression (LR) combination function is employed by the exemplary embodiment to analyze classifier correlation by a statistical model based on logistic regression. Any combination function can be employed to combine individual decisions from multiple classifiers to reach a consensus decision, as would be apparent to a person of ordinary skill in the art.

Logistic Regression Combination Function

Logistic regression provides a suitable mechanism for combining the decisions of muliple classifiers. In this approach, the log-odds ratio between two classes is modeled as a regression function of the decisions given by the individual classifiers. A widely used regression model in this context is simple linear regression, where a linear combination of the individual decisions of the classifiers $S_j^k$ for message $m_i$ is used to predict the logarithm of the ratio of the probability that the message belongs to one class over the probability of it belonging to the other class. From the predicted log-odds ratio, one can derive the posterior probability of the message belonging to the target class, and assignment to that class is made if the estimated posterior probability is greater than 0.5.

Logistic regression is advantageous as it exploits the standard tools of regression to estimate the weights according to each classifier's past contributions to correct decisions on the training data. A higher weight can be given to a classifier within a subset $S_j^k$ that has better classification accuracy than other classifiers in the same subset. This has a chance of increasing the overall classification accuracy beyond simple voting.

The procedure for decision combination with logistic regression can be formulated mathematically, as follows.

Let $S_j^k$ be the $j^{th}$ system of classifiers of length $k$, i.e., $\mid S_j^k \mid = k \; \forall j \in \left\{ 1, \ldots, \binom{N}{k} \right\}$.

$$p_j^k = 1 - \frac{1}{\mid M \mid} \sum_{i=1}^{\mid M \mid} \hat{p}_{i,j}^k$$

(2)

where $p_j^k$ is the classification performance of $S_j^k$; M is the set of all SIP messages. |M| is the number of SIP messages in the set; and

$$\hat{p}_{i,j}^k = \begin{cases} 0 & : \hat{c}_{i,j}^k = c_i, \\ 1 & : \text{otherwise.} \end{cases}$$

$$(3)$$

where $\hat{p}_{i,j}^k$ and $\hat{c}_{i,j}^k$ are estimated values, which can be either 0 or 1.

Here,

$$\hat{c}_{i,j}^k = \begin{cases} 1 & : \hat{\pi}_{i,j}^k \geq 0.50, \\ 0 & : \text{otherwise.} \end{cases}$$

$$\hat{\pi}_{i,j}^k = \frac{1}{(1 + e^{-\hat{z}})}, \text{ and}$$

$$\hat{z} = \beta_0 + \sum_{a=1}^{k} \beta_a \hat{c}_{i,j}^k$$

$$(4)$$

where $\beta_\alpha$ are the estimated coefficients of $\hat{c}_{i,j}^k$ for the simple linear regression model. Equation 4 is the combination function for LR, returning a 1 when the LR result is $\geq 0.50$ (since the decision of each classifier is binary). Equation 4 is the evaluation function that evaluates the classification performance of $S_j^{\prime k}$.

The selection function is expressed as:

$$\sigma(S) = S_{j^*}^{\prime k^*}, \tag{5}$$

The constraints on the selection function are expressed as follows:

$$k^* = \min \left\{ k \mid p_j^k \text{ is maximum for some } j = 1, \ldots, \binom{N}{k} \right\} \text{ and } j^* = \min \left\{ j \mid p_j^{k^*} \text{ is maximized} \right\}.$$

Multiple Classifier Process

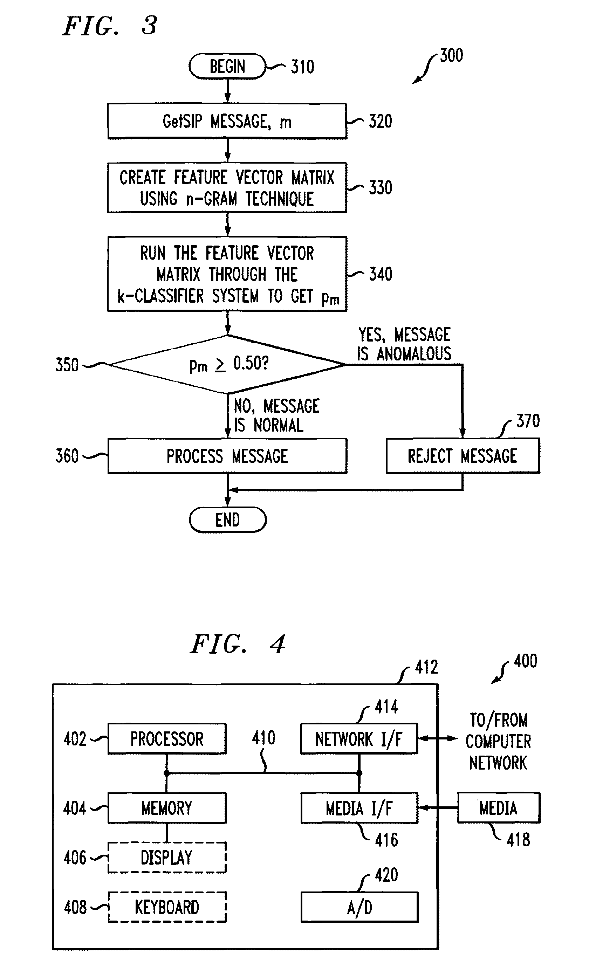

FIG. 3 is a flow chart describing an exemplary multiple classifier process 300 incorporating features of the present invention. As shown in FIG. 3, the multiple classifier process 300 is initiated during step 310 and then obtains a SIP message, m, during step 320. A feature vector matrix of the message is created during step 330 using an n-gram technique.

The feature vector matrix is applied to the multiple classifier system 100 (FIG. 1) during step 340 to obtain $P_m$. A test is performed during step 350, to determine if $p_m$ exceeds an exemplary threshold of 0.50. If it is determined during step 350 that $P_m$ does not exceed the exemplary threshold of 0.50, then the message is classified as normal and processed during step 360. If, however, it is determined during step 350 that $p_m$ does exceed the exemplary threshold of 0.50, then the message is classified as anomalous and rejected during step 370. Program control then terminates for the current message.

One or more embodiments can make use of software running on a general purpose computer or workstation. FIG. 4 depicts an exemplary computer system 400 that may be useful in implementing one or more aspects and/or elements of the present invention. With reference to FIG. 4, such an implementation might employ, for example, a processor 402, a memory 404, and an input/output interface formed, for example, by a display 406 and a keyboard 408.

The term "processor" as used herein is intended to include any processing device, such as, for example, one that includes a CPU (central processing unit) and/or other forms of processing circuitry. Further, the term "processor" may refer to more than one individual processor. The term "memory" is intended to include memory associated with a processor or CPU, such as, for example, RAM (random access memory), ROM (read only memory), a fixed memory device (for example, hard drive), a removable memory device (for example, diskette), a flash memory and the like.

In addition, the phrase "input/output interface" as used herein, is intended to include, for example, one or more mechanisms for inputting data to the processing unit (for example, mouse), and one or more mechanisms for providing results associated with the processing unit (for example, printer). The processor 402, memory 404, and input/output interface such as display 406 and keyboard 408 can be interconnected, for example, via bus 410 as part of a data processing unit 412. Suitable interconnections, for example via bus 410, can also be provided to a network interface 414, such as a network card, which can be provided to interface with a computer network, and to a media interface 416, such as a diskette or CD-ROM drive, which can be provided to interface with media 418.

Analog-to-digital converter(s) 420 may be provided to receive analog input, such as analog video feed, and to digitize same. Such converter(s) may be interconnected with system bus 410.

Accordingly, computer software including instructions or code for performing the methodologies of the invention, as described herein, may be stored in one or more of the associated memory devices and, when ready to be utilized, loaded in part or in whole and implemented by a CPU. A data processing system suitable for storing and/or executing program code will include at least one processor 402 coupled directly or indirectly to memory elements 404 through a system bus 410. The memory elements can include local memory employed during actual implementation of the program code, bulk storage, and cache memories which provide temporary storage of at least some program code in order to reduce the number of times code must be retrieved from bulk storage during implementation.

Input/output or I/O devices (including but not limited to keyboards 408, displays 406, pointing devices, and the like) can be coupled to the system either directly (such as via bus 410) or through intervening I/O controllers (omitted for clarity).

Network adapters such as network interface 414 may also be coupled to the system to enable the data processing system to become coupled to other data processing systems or remote printers or storage devices through intervening private or public networks. Modems, cable modem and Ethernet cards are just a few of the currently available types of network adapters.

As previously indicated, the arrangements of multiple classifier systems, as described herein, provide a number of advantages relative to conventional arrangements. As indicated above, the disclosed techniques allow the validity of a SIP message to be determined without parsing the message. The exemplary multiple classifier system employs a plurality of several high-performing classifiers with complementary strengths, and a decision combination function. In this manner, the disclosed multiple classifier system does not rely on a decision from a single classifier, but rather, combines individual decisions from multiple classifiers to reach a consensus decision. A combination function can be used to take advantage of the strengths of individual classifiers, avoid their weaknesses, and improve classification accuracy.

Also, the disclosed techniques for determining the validity of SIP messages can be used to determine the validity of self-similar messages.

It is emphasized that the above-described embodiments of the invention are intended to be illustrative only. In general, the exemplary multiple classifier systems can be modified, as would be apparent to a person of ordinary skill in the art, to incorporate an alternative classifiers and/or combination functions. In addition, the disclosed techniques for determining the validity of SIP messages can be employed in any working system. For example, the present invention can be deployed in a SIP proxy server that accepts SIP messages and proxies them downstream. Such a system could also consist of other SIP entities such as back-to-back user agents, user agent server, user agent client, registrar, redirect server, a SIP firewall element or a session border controller. Generally, any system that accepts SIP messages and acts upon the message can benefit from this invention.

In addition, while the exemplary embodiments have contemplated a combination of classifier decisions that are made in parallel, a multiple classifier system in accordance with the present invention can be more flexible in the organization of the classifiers. For example, some classifiers can run in parallel while other classifiers can run sequentially, and the combination of decisions can happen in different stages, as would be apparent to a person of ordinary skill in the art.

While exemplary embodiments of the present invention have been described with respect to digital logic blocks, as would be apparent to one skilled in the art, various functions may be implemented in the digital domain as processing steps in a software program, in hardware by circuit elements or state machines, or in combination of both software and hardware. Such software may be employed in, for example, a digital signal processor, application specific integrated circuit, micro-controller, or general-purpose computer. Such hardware and software may be embodied within circuits implemented within an integrated circuit.

Thus, the functions of the present invention can be embodied in the form of methods and apparatuses for practicing those methods. One or more aspects of the present invention can be embodied in the form of program code, for example, whether stored in a storage medium, loaded into and/or executed by a machine, or transmitted over some transmission medium, wherein, when the program code is loaded into and executed by a machine, such as a computer, the machine becomes an apparatus for practicing the invention. When implemented on a general-purpose processor, the program code segments combine with the processor to provide a device that operates analogously to specific logic circuits. The invention can also be implemented in one or more of an integrated circuit, a digital signal processor, a microprocessor, and a micro-controller.

It is to be understood that the embodiments and variations shown and described herein are merely illustrative of the principles of this invention and that various modifications may be implemented by those skilled in the art without departing from the scope of the invention.

## Claims

1. A method (300) for processing a SIP message, comprising:

   creating (320) a feature vector matrix of said SIP message using an n-gram technique;
   processing (340) said feature vector matrix training a plurality of classifiers on a training data set;
   combining results generated by said plurality of classifiers to obtain a combined result; and
   processing (360) or rejecting (370) said SIP message based on said combined result;
   wherein
   said combining step employs a logistic regression; and
   said logistic regression employs a linear combination of individual decisions of said plurality of classifiers to predict a logarithm of the ratio of the probability that said SIP message belongs to a first class over the probability of said SIP message belonging to a second class.

2. The method of claim 1, wherein said step of processing said SIP message further comprises the step of classifying said SIP message as a normal message or an anomalous message.

3. The method of claim 1, wherein said combining step comprises one or more of

   (i) employing strengths of one or more of said plurality of classifiers,
   (ii) avoiding weaknesses one or more of said plurality of classifiers, and
   (iii) improving classification accuracy.

4. The method of claim 1, wherein said SIP message is a self-similar message.

5. An apparatus for carrying out the method according to anyone of claims 1 to 4, comprising a memory (404) and at least one hardware device (402), coupled to the memory.

6. An article of manufacture for carrying out the method according to anyone of claims 1 to 4, comprising a tangible machine readable recordable medium containing one or more programs.

## Patentansprüche

1. Verfahren (300) für das Verarbeiten einer SIP-Nachricht, umfassend:

   Erstellen (320) einer Funktions-Vektormatrix besagter SIP-Nachricht unter Verwendung einer N-Gramm-Technik;
   Verarbeiten (340) besagter Funktions-Vektormatrix, eine Vielzahl von Klassifizierer auf einen Übungsdatensatz einübend.
   Kombinieren der durch besagte Vielzahl von Klassifizierern generierten Ergebnisse zwecks Erhalts eines kombinierten Ergebnisses; und
   Verarbeiten (360) oder Zurückweisen (370) besagter SIP-Nachricht auf der Grundlage des kombinierten Ergebnisses;
wobei

besagter Schritt des Kombinierens eine logistische Regression verwendet; und

besagte logistische Regression eine lineare Kombination individueller Entscheidungen besagter Vielzahl von Klassifizierern einsetzt, um einen Logarithmus für die Rate der Wahrscheinlichkeit vorherzusagen, mit welcher besagte SIP-Nachricht eher zu einer ersten Klasse gehört, im Vergleich zu der Wahrscheinlichkeit, mit welcher besagte SIP-Nachricht zu einer zweiten Klasse gehört.

**2.** Verfahren nach Anspruch 1, wobei besagter Schritt des Verarbeitens besagter SIP-Nachricht weiterhin den Schritt des Klassifizierens besagter SIP-Nachricht als normale Nachricht oder als anormale Nachricht umfasst.

**3.** Verfahren nach Anspruch 1, wobei der besagte Schritt des Kombinierens einen oder mehrere der folgenden Aspekte umfasst:

(i) Anwenden der Stärken von einem oder mehreren aus besagter Vielzahl von Klassifizierern,
(ii) Vermeiden der Schwächen von einem oder mehreren aus besagter Vielzahl von Klassifizierern,
(iii) Verbesserung der Klassifizierungsgenauigkeit.

**4.** Verfahren nach Anspruch 1, wobei die besagte SIP-Nachricht eine selbstähnliche Nachricht ist.

**5.** Vorrichtung für das Ausführen des Verfahrens nach einem jeglichen der Ansprüche 1 bis 4, einen Speicher (404) und mindestens ein an den Speicher gekoppeltes Hardwaregerät (402) umfassend.

**6.** Herstellungsgegenstand für das Ausführen des Verfahrens nach einem jeglichen der Ansprüche 1 bis 4, ein physisches, maschinenlesbares und beschreibbares Medium mit einem oder mehreren Programmen umfassend.

**Revendications**

**1.** Procédé (300) de traitement d'un message SIP, comprenant les étapes suivantes :

créer (320) une matrice vectorielle de fonctionnalité dudit message SIP en employant une technique à n-gramme ;
traiter (340) ladite matrice vectorielle de fonctionnalité en formant une pluralité de classificateurs sur un ensemble de données de formation ;
combiner les résultats générés par ladite pluralité de classificateurs afin d'obtenir un résultat combiné ; et
traiter (360) ou rejeter (370) ledit message SIP sur la base dudit résultat combiné ;
procédé selon lequel
ladite étape de combinaison emploie une régression logistique ; et

ladite régression logistique emploie une combinaison linéaire de décisions individuelles de ladite pluralité de classificateurs pour prévoir un logarithme du rapport entre la probabilité pour que ledit message SIP appartienne à une première classe et la probabilité pour que ledit message SIP appartienne à une deuxième classe.

**2.** Procédé selon la revendication 1, selon lequel ladite étape de traitement dudit message SIP comprend en outre l'étape de classification dudit message SIP en tant que message normal ou message anormal.

**3.** Procédé selon la revendication 1, selon lequel ladite étape de combinaison comprend une ou plusieurs des opérations suivantes

(i) employer les points forts d'un ou plusieurs de ladite pluralité de classificateurs,
(ii) éviter les faiblesses d'un ou plusieurs de ladite pluralité de classificateurs, et
(iii) améliorer la précision de classification.

**4.** Procédé selon la revendication 1, selon lequel ledit message SIP est un message autosimilaire.

**5.** Appareil destiné à mettre en oeuvre le procédé selon l'une quelconque des revendications 1 à 4, comprenant une mémoire (404) et au moins un dispositif matériel (402) connecté à la mémoire.

**6.** Article manufacturé destiné à mettre en oeuvre le procédé selon l'une quelconque des revendications 1 à 4, comprenant un support enregistrable lisible par machine réelle contenant un ou plusieurs programmes.

## FIG. 1

SIP MESSAGE
110
→
MULTIPLE
CLASSIFIER
SYSTEM
⌐ 100
MESSAGE
CLASSIFICATION
120
(NORMAL, ANOMALOUS)
→

## FIG. 2

⌐ 200

| CLASSIFIER/FAMILY | % CORRECT | % INCORRECT |
|---|---|---|
| JRip/RULES | 96.87 | 3.13 |
| END/META | 95.45 | 4.55 |
| FilteredClassifier/META | 95.45 | 4.55 |
| C4.5/TREES | 95.45 | 4.55 |
| ⋮ | | ⋮ |
| ⋮ | | ⋮ |
| RBFNetwork/FUNCTIONS | 55.90 | 44.10 |
| ClassificationViaRegression/META | 51.02 | 48.98 |
| VOTE/META | 51.02 | 48.98 |
| BAGGING/META | 51.02 | 48.98 |
| REPTree/TREES | 51.02 | 48.98 |
| EnsembleSelection/META | 51.02 | 48.98 |

## FIG. 3

## FIG. 4

**REFERENCES CITED IN THE DESCRIPTION**

**Non-patent literature cited in the description**

- **J. ROSENBERG et al.** *SIP: Session Initiation Protocol. RFC 3261,* 2002
- **ANIL MEHTA et al.** *INTEGRATED NETWORK MANAGEMENT,* 2011
- **HO T K et al.** *PATTERN RECOGNITION,* 2011
- **TIN KAM HO et al.** Decision Combination in Multiple Classifier Systems. *IEEE Transactions on Pattern Analysis and Machine Intelligence,* 1994, vol. 16 (1), 66-75
- **K. RIECK et al.** A Self-Learning System for Detection of Anomalous SIP Messages. *Principles, Systems and Applications of IP Telecommunications. Services and Security for Next Generation Networks: Second International Conference, IPTComm 2008,* 01 July 2008
- **IAN H. WITTEN ; EIBE FRANK.** Data Mining: Practical Machine Learning Tools and Techniques. Elsevier Inc, 2005
- **TREVOR HASTIE et al.** The Elements of Statistical Learning: Data Mining, Inference, and Prediction. Springer Science+Business Media, 2009
- **J. KITTLER et al.** On Combining Classifiers. *IEEE Transactions on Pattern Analysis and Machine Intelligence,* 1998, vol. 20 (3), 226-239